# EUROPEAN PATENT SPECIFICATION

(11) **EP 3 311 369 B1**
(45) Date of publication and mention of the grant of the patent: **07.08.2019**
(21) Application number: 16744903.2
(22) Date of filing: 08.06.2016
(51) Int. Cl.: G06F 3/01, B32B 9/04, B32B 3/26, G01L 1/20, G06F 3/041, E04F 15/02, G08B 13/10

(54) **SYSTEM FOR FORMING A FLOOR FOR DETECTING A PRESSURE APPLIED THEREON, DEVICE FOR USE IN SUCH SYSTEM, FLOORING PROVIDED THEREWITH AND CONNECTION ELEMENT FOR THE DEVICE**
SYSTEM ZUM HERSTELLEN EINES BODENS ZUR ERKENNUNG EINES DARAUF AUFGEBRACHTEN DRUCKS, VORRICHTUNG ZUR VERWENDUNG IN SOLCH EINEM SYSTEM, FUSSBODEN DAMIT UND VERBINDUNGSELEMENT FÜR DIE VORRICHTUNG
SYSTÈME DESTINÉ À FORMER UN SOL PERMETTANT DE DÉTECTER UNE PRESSION APPLIQUÉE DESSUS, DISPOSITIF DESTINÉ À ÊTRE UTILISÉ DANS UN TEL SYSTÈME, REVÊTEMENT DE SOL LE COMPORTANT ET ÉLÉMENT DE CONNEXION POUR LE DISPOSITIF

(30) Priority: 19.06.2015 NL 2014995
(43) Date of publication of application: 25.04.2018
(73) Proprietor: Tarkett B.V., 5142 PA Waalwijk (NL)
(72) Inventor: WAGENAAR, Bertus Michiel, 6842 AA Arnhem (NL)
(74) Representative: Patentwerk B.V.
(86) International application number: PCT/NL2016/050410
(87) International publication number: WO 2016/204606

(56) References cited:
- US-A1- 2008 018 608
- US-A1- 2008 018 608
- US-A1- 2008 213 529
- ALEX M GRAU ET AL: "Mechanical force redistribution", HUMAN FACTORS IN COMPUTING SYSTEMS, ACM, 2 PENN PLAZA, SUITE 701 NEW YORK NY 10121-0701 USA, 26 April 2014 (2014-04-26), pages 4137-4146, XP058046706, DOI: 10.1145/2556288.2557172 ISBN: 978-1-4503-2473-1
- ALEX M GRAU ET AL: "Mechanical force redistribution", HUMAN FACTORS IN COMPUTING SYSTEMS, ACM, 2 PENN PLAZA, SUITE 701 NEW YORK NY 10121-0701 USA, 26 April 2014 (2014-04-26), pages 4137-4146, XP058046706, DOI: 10.1145/2556288.2557172 ISBN: 978-1-4503-2473-1

## Description

The present invention relates to a system for forming a floor for detecting a pressure applied thereon and a flooring part for use in such system.

Detecting a pressure on a floor, in particular applied by a person walking, sitting or lying on said floor, may be found interesting for various reasons. The knowledge about the presence of a person may be used in order to create convenience for that person, for instance by automatically switching on lights or other equipment in the room where the person is, it may be used for safety reasons, as part of an alarm system, or for determining irregularities, such as a person fallen on a floor. More advanced systems may be used to keep track of persons, and to monitor their behaviour. This may be the case in a supermarket, or in other places where behaviour of a group of people is to be monitored.

Systems for at least some of the above mentioned purposes exist. However, they have various disadvantages. In particular, they set numerous requirements to the flooring that can be applied, and their modularity and scalability are often very poor, not in the last place due to technical complexity, with often high costs as a result. Other systems lack the possibility to be re-used in another configuration and/or location. An example of a known system which is not adapted for use in flooring applications and therefore encounters such disadvantages is US 2008/0018608. This document discloses a data input device for human-device interaction, which device is provided with a film-based pressure sensor build from a first carrier film, a second carrier film and a spacer arranged between the carrier films for keeping them at a distance from one other. A control circuit is able to operate in multiple operation modes and to measure electrical resistance. It is therefore a goal of the present invention to provide a system for forming a floor for detecting a pressure applied thereon, that takes away at least some of the above mentioned disadvantages, or that at least provides a useful alternative to the state of the art.

The article
"Mechanical force redistribution" by A.M. Grau et al. published in HUMAN FACTORS IN COMPUTING SYSTEMS, ACM on 26 April 2014, pages 4137-4146 (XP058046706, DOI: 10.1145/2556288.2557172 ISBN: 978-1-4503-2473-1) shows in Fig. 5b and 5d show pressure-detecting flooring parts. Its working principle is "mechanical force distribution". Applied pressure (manual or by foot) on a touch layer is redistributed by a redistribution layer to the single forcels of a sensing array. Sensing array is made up of two films with printed electrodes facing each other. Each facing electrode pair forms a forcel. Under pressure, the electrodes approach and the forcel is conductive. In the absence of pressure, resistance is high (or infinite) and the forcel is not conductive. Under or above each single forcel is a protrusion layer enabling force concentration at forcel.

The invention thereto proposes a device for forming a floor for detecting a pressure applied thereon, comprising a first foil layer, provided with at least a first electric conductor and at least a second electric conductor, electrically isolated from each other; a second foil layer, comprising an electric resistance, wherein the first layer and the second layer are arranged on top of each other, such that the respective sides with the at least one first and second electric conductor and the resistance face each other, and wherein the device is dimensioned such that a projection of the location of the electrical resistance on the first layer covers an area to which both the at least one first and second electric conductor extend, a separator, for keeping the first and the second layer at least locally at a distance from each other when there is no pressure applied to the device; at least a first connector point, electrically coupled to the first electric conductor, and outwardly available at a first pair of opposite sides of the device; at least a second connector point, electrically coupled to the second electric conductor, and outwardly available at the second pair of opposite sides of the device.

The shape of the first and the second foil layers may be essentially rectangular, but other shapes like hexagons or circles are possible too. In particular shapes that can be combined in a pattern that covers a closed or almost closed area are preferred, wherein the use of multiple pieces with different shapes is possible too.

When a pressure is applied on a device according to the invention at the height of the first and the second electric conductor, said electric conductors are both pressed against the electric resistance. The resistance measured between the first and the second electric conductor decreases, in dependence of the pressure on the device. This way, not only a binary value representing the presence of a pressure (and thus an object or person) can be determined, but also the amount of pressure, which is related to the weight of the person or object. The first connector point and the second connector point are outwardly available at opposite sides of the device, so that with multiple devices according to the invention, an x times y matrix like grid can be formed, with x parallel lines of interconnected devices in a first direction, and y parallel lines of interconnected devices in a second direction, perpendicular to the first direction when their first connector points and the second connector points are interconnected.

The invention thereto also provides an interconnector, comprising a foil layer, at a first side thereof provided with an electric conductor, and an adhesive, provided at the second side thereof, for fixing the interconnector to a substrate, such as a floor. The electric conductor of the interconnector can be arranged against two outwardly available connector points of respective devices for forming a floor for detecting a pressure applied thereon as described above.

The invention may be applied with several types of flooring, such as carpet, vinyl flooring (homogeneous, heterogeneous LVT), linoleum, wood or laminate.

The invention further relates to a flooring part, such as a carpet tile comprising a carpet top layer, comprising poles, a carpet bottom layer, comprising a backing, or such as a laminate, marmoleum or linoleum piece, of which the respective backing on the side facing away from the poles or the back side is provided with a device for forming a floor for detecting a pressure applied thereon as described above. The flooring part and the device may be essentially same sized and/or shaped, and may be fixed or adhered to each other in order to facilitate a quick and easy placement.

Preferably, the combination of the first and second foil layers as a whole are water resistant, for instance by means of a printed non-conductor material. In a preferred embodiment, thereto, the first and the second foil layers and the interconnectors are provided with waterproof adhesives.

The invention also relates to a system for forming a floor for detecting a pressure applied thereon, comprising a plurality of adjacently arranged flooring parts as described above, a plurality of interconnectors as described above, wherein the respective first connector points and second connector points of adjacent flooring parts are mutually electrically connected by electric conductors of interconnectors, wherein each contact of a connector point of a flooring part and a conductor of an interconnector is provided with a conductive adhesive, for electrically and mechanically coupling the flooring parts and the interconnectors, such that all first electric conductors of flooring parts in adjacently arranged flooring parts in a first direction are electrically connected, and all second electric conductors of flooring parts in a second direction, perpendicular to the first direction, of adjacently arranged flooring parts are electrically connected.

This way an x times y matrix grid is formed, with x parallel lines of interconnected devices in a first direction, and y parallel lines of interconnected devices in a second direction, perpendicular to the first direction when their first connector points and the second connector points are interconnected. In order to detect a pressure or person, the matrix grid should be "scanned".

For that purpose, the system may further comprise a controller, for subsequently measuring an electric resistance between combinations of electrically connected first electric conductors and electrically connected second electric conductors. The controller subsequently determines the resistance between each combination of rows x and y, as to obtain a map of the entire surface. The operation is repeated continuously, so that an actual overview of the presence of people or objects on the surface is available.

It has appeared that it is beneficial in a sense of noise reduction, in particular cross talk between lines, when the minimal electric resistance of the electrical connections of the first and second electric conductors of one tile together, is about a factor 1000 smaller than the minimal electric resistance of the second foil layer when a pressure is exerted on the tile.

Furthermore, in order to measure a resistance, a DC voltage has to be applied on the combinations of electrically connected first electric conductors and electrically connected second electric conductors. For this purpose, a linear (non-switched) power supply is preferred, which has no or very low ripple.

The controller is adapted to provide a data signal representing a pressure on each of the flooring parts, which may be used for multiple purposes, such as controlling further apparatus such as lights, for use in an alarm system, and for detecting irregularities such as fallen persons, on order to be able to provide first aid.

Both in the device and in the flooring part, the first electric conductor and the second electric conductor may be arranged as fingers that extend in between each other. This results in a short path through the resistance in case of a pressure, and enables a "sharp"detection. Although silver or copper may be considered as an evident choice for its electric properties, aluminium may be chosen here, for that material is easier to recycle. The resistance may comprise a carbon layer.

The separator may be embodied by multiple in particular non-conductive paint dots, arranged on at least one of the layers. Other separator shapes may be hexagonal grids or random lines.

For flooring parts, in particular carpet tiles may easily become charged with static electricity, it may be desired to provide an electrically conducting path from the outwardly facing sides from the first foil layer to the second foil layer of the device. Besides an electric wiring, this conducting path may also be formed by a through hole, when the flooring part itself is provided with a carbon or other type of conducting yarn, and conductive pathways for any layer thereunder.

The invention will now be explained in more detail with reference to the following figures.

Herein:
- Figures 1a, b show a schematic top and cross sectional view of a device according to the present invention;
- Figure 2 shows a schematic view of a flooring according to the present invention; and
- Figure 3a, b show electric schemes of a floorings according to the present invention.

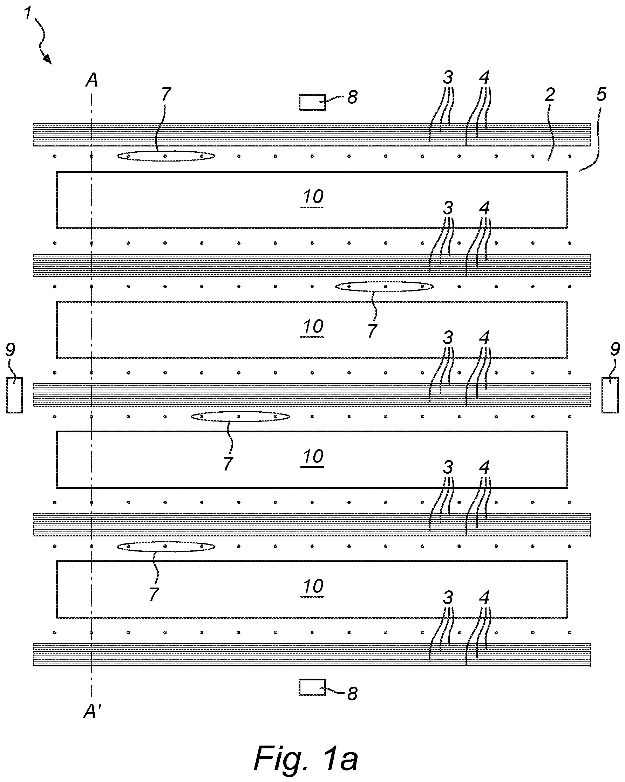

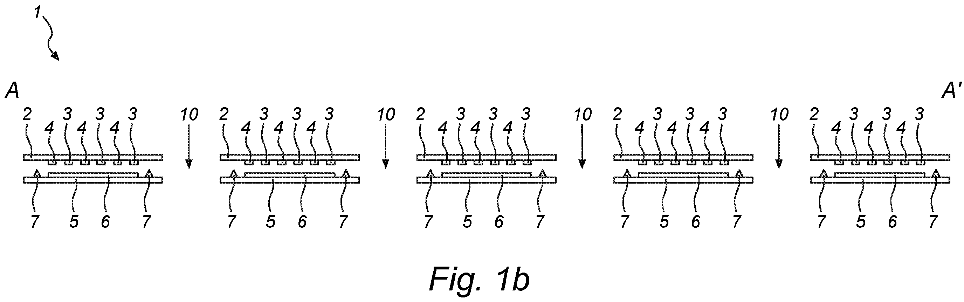

Figure 1 shows a schematic view of a device 1 according to the present invention. The device 1 comprises a first essentially rectangular foil layer 2, provided with at least a first electric conductor 3 and at least a second electric conductor 4, electrically isolated from each other, a second essentially rectangular foil layer 5, comprising an electric resistance 6, wherein the first layer 2 and the second layer 5 are arranged on top of each other, such that the respective sides with the at least one first and second electric conductor 3, 4 and the resistance 6 face each other, and wherein the device is dimensioned such that a projection of the location of the electrical resistance on the first layer covers an area to which both the at least one first and second electric conductor extend. The device further comprises a separator 7, here embodied by a number of elevated spots, for keeping the first and the second layer 2, 5 at least locally at a distance from each other when there is no pressure applied to the device. The device further shows a first connector point 8, electrically coupled to the first electric conductor 3, and outwardly available at a first pair of opposite sides of the device 1, and a second connector point 9, electrically coupled to the second electric conductor 4, and outwardly available at the second pair of opposite sides of the device 1. The device comprises through holes 10, forming an electrically conducting path from the outwardly facing sides from the first essentially rectangular foil layer to the second essentially rectangular foil layer, which serves to enable grounding of the carpet tile.

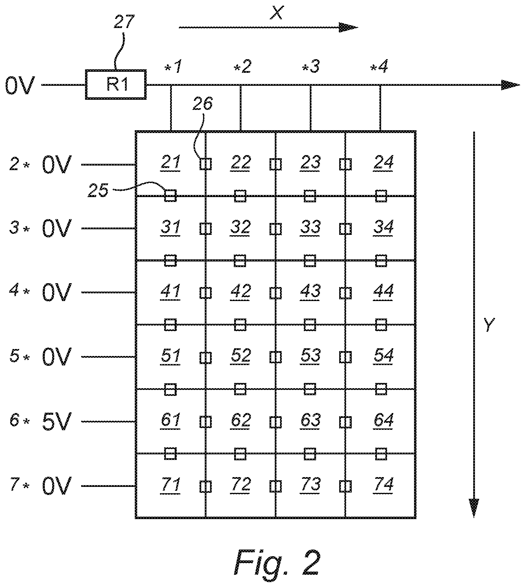

Figure 2 shows a schematic view of a flooring according to the present invention, wherein carpet tiles 21, 22, 23, 24, 31, 32, 33, 34, 41, 42, 43, 44, 51, 52, 53, 54, 61, 62, 63, 64, 71, 72, 73, 74 each provided with a device from figure 1 are arranged in a room, thus forming a flooring comprising seven rows, 2*, 3*, 4*, 5*, 6*, 7*, and four columns *1, *2, *3 and *4. the first connectors of tiles in the same row are mutually connected by interconnectors, like interconnector 25, and the second connectors of tiles in the same row are mutually connected by interconnectors, like interconnector 26.

A pressure on the flooring is determined by scanning the resistances of the devices corresponding with the respective flooring parts, which is done by sequentially connecting each combination of rows and columns to a voltage source, and determining the current that flows. This current may be determined indirectly, that is, by measuring the voltage over a resistance 27, that is coupled in series with the respective combinations of rows and columns.

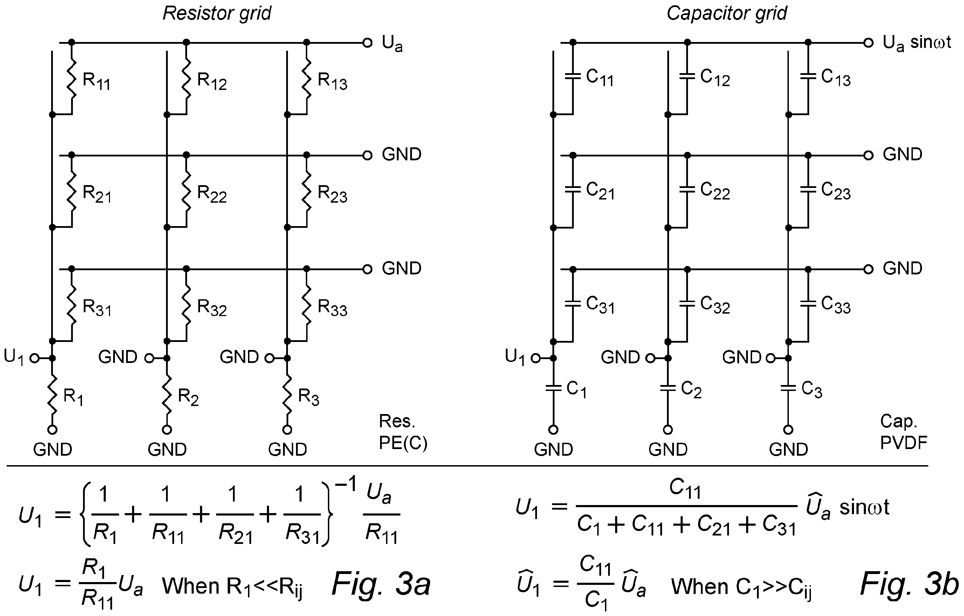

Figure 3a shows an electric scheme of a flooring according to the present invention, for a three times three matrix, and shows equations for determining the voltage measured over the resistance R1. The equation enables to determine the resistance corresponding with the device under a specific tile. With a predetermined relation between the resistance of the device and the pressure applied thereon, the weight of a person or object on the flooring part can be determined.

Figure 3b shows an alternative electric scheme that can be used when instead of a resistance, a pressure or body dependent capacity is used. In that case, the use of an alternating reference voltage is preferred but not strictly necessary. With a predetermined relation between the capacity of the device and the pressure applied thereon, the weight of a person or object on the flooring part can be determined.

It should be noted that also an embodiment with solely a resistance can be used for measurements based on capacitive properties. In particular when the first electric conductor and the second electric conductor are arranged as fingers that extend in between each other, a body capacitance of a person approaching the device or carpet tile according to the invention can be determined, even before a pressure is exerted on the device or flooring part.

## Claims

1. System for forming a floor for detecting a pressure applied thereon, comprising:
- A plurality of adjacently arranged flooring parts (1), each part comprising:
- A flooring part layer, comprising a top side;
- A back side, provided with:
- A first foil layer (2), provided with at least a first electric conductor (3) and at least a second electric conductor (4), electrically isolated from each other;
- A second foil layer (5), comprising an electric Resistance (6);
- Wherein the first layer (2) and the second layer (5) are arranged on top of each other, such that the respective sides with the at least one first and second electric conductor (3, 4) and the resistance (6) face each other, and are dimensioned such that a projection of the location of the electrical resistance (6) on the first layer (2) covers an area to which both the at least one first and second electric conductor (3, 4) extend;
- A separator (7), for keeping the first and the second layer (2, 5) at least locally at a distance from each other when there is no pressure applied to the flooring part;
- At least a first connector point (8), electrically coupled to the first electric conductor (3), and outwardly available at a first pair of opposite sides of the flooring part (1);
- At least a second connector point (9), electrically coupled to the second electric conductor (4), and outwardly available at the second pair of opposite sides of the flooring part (1);
- A plurality of interconnectors (25, 26), the interconnectors (25, 26) each comprising:
- A foil layer, at a first side thereof provided with an electric conductor,
- An adhesive, provided at the second side thereof, for fixing the interconnector to a substrate, such as a floor;
wherein
- all first electric conductors (3) of flooring parts (1) in adjacently arranged flooring parts (1) in a first direction are electrically connected and all second electric conductors (4) of flooring parts (1) in a second direction of adjacently arranged flooring parts (1) are electrically connected.

2. System according to claim 1, wherein the respective first connector points (8) and second connector points (9) of adjacent flooring parts (1) are mutually electrically connected by electric conductors of interconnectors (25, 26), wherein each contact of a connector point of a part and a conductor of an interconnector (25, 26) is provided with a conductive adhesive, for electrically and mechanically coupling the flooring parts and the interconnectors.

3. System according to claim 1 or 2, wherein the first direction of the first connectors and the second direction of the second connectors are under an angle, and in particular mutually perpendicular.

4. System according to any of the preceding claims, further comprising a controller, for subsequently measuring an electric resistance between combinations of electrically connected first electric conductors and electrically connected second electric conductors.

5. System according to claim 4, wherein the controller is adapted to provide a data signal representing a pressure on each of the flooring parts.

6. Flooring part (1) for use in a system according to any of the preceding claims, for
forming a floor for detecting a pressure, comprising:
- A flooring part layer, comprising a top side;
- A flooring bottom layer, comprising a backing, the backing on the side facing away from the top side provided with:
a. A first foil layer (2), provided with a first electric conductor (3) and a second electric conductor (4), electrically isolated from each other;
b. A second foil layer (5), comprising an electric resistance (6);
c. Wherein the first layer (2) and the second layer (5) are arranged on top of each other, such that the respective sides with the first and second electric
conductor (3, 4) and the resistance (6) face each other, and are dimensioned such that a projection of the location of the electrical resistance (6) on the first layer (2) covers an area to which both the first and the second electric conductor (3, 4) extend;
d. A separator (7), for keeping the first and the second layer (2, 5) at least locally at a distance from each other when there is no pressure applied to the device;
e. At least a first connector point (8), electrically coupled to the first electric conductor (3), and outwardly available at a first pair of opposite sides of the device;
f. At least a second connector point (9), electrically coupled to the second electric conductor (4), and outwardly available at the second pair of opposite sides of the device.

7. Flooring part according to claim 6, wherein the first electric conductor (3) and the second electric conductor (4) are arranged as fingers that extend in between each other.

8. Flooring part according to claim 6 or 7, wherein the first and/or second electric conductor (3, 4) comprises aluminium.

9. Flooring part according to any of claims 6-8, wherein the resistance (6) comprises a carbon layer.

10. Flooring part according to any of claims 6-9, wherein the separator (7) comprises paint dots, arranged on at least one of the layers.

11. Flooring part according to any of claims 6-10, comprising an electrically conducting path from the outwardly facing sides from the first foil layer (2) to the second foil layer (5).

12. Flooring part according to claim 11, wherein the conducting path is formed by a through hole (10).

13. Flooring part according to any of the preceding claims, wherein the combination of the first and second foil layers (2, 5) as a whole is water resistant.

## Patentansprüche

1. System zum Herstellen eines Bodens zur Erkennung eines darauf ausgeübten Drucks, umfassend:
- eine Vielzahl von benachbart angeordneten Fußbodenteilen (1), wobei jedes Teil umfasst:
- eine Fußbodenteilschicht, die eine Oberseite umfasst;
- eine Rückseite, die ausgestattet ist mit:
- einer ersten Folienschicht (2), die mit mindestens einem ersten elektrischen Leiter (3) und mindestens einem zweiten elektrischen Leiter (4) ausgestattet ist, die voneinander elektrisch isoliert sind;
- eine zweite Folienschicht (5), die einen elektrischen Widerstand (6) umfasst;
- wobei die erste Schicht (2) und die zweite Schicht (5) übereinander angeordnet sind, so dass die jeweiligen Seiten mit dem mindestens einen ersten und zweiten elektrischen Leiter (3, 4) und dem Widerstand (6) zueinander weisen, und so dimensioniert sind, dass eine Projektion der Position des elektrischen Widerstands (6) auf die erste Schicht (2) einen Bereich abdeckt, in den sich sowohl der mindestens eine erste als auch der mindestens eine zweite Leiter (3, 4) erstrecken;
- einen Separator (7), um die erste und die zweite Schicht (2, 5) mindestens lokal in einem Abstand zueinander zu halten, wenn kein Druck auf das Fußbodenteil ausgeübt wird;
- mindestens einen ersten Verbindungspunkt (8), der elektrisch an den ersten elektrischen Leiter (3) gekoppelt ist und nach außen an einem ersten Paar von gegenüber liegenden Seiten des Fußbodenteils (1) zugänglich ist;
- mindestens einen zweiten Verbindungspunkt (9), der elektrisch an den zweiten elektrischen Leiter (4) gekoppelt ist und nach außen an einem zweiten Paar von gegenüber liegenden Seiten des Fußbodenteils (1) zugänglich ist;
- eine Vielzahl von Koppelverbindern (25, 26), wobei die Koppelverbinder (25, 26) jeweils umfassen:
- eine Folienschicht, die an ihrer ersten Seite mit einem elektrischen Leiter ausgestattet ist,
- einen Klebstoff, der an ihrer zweiten Seite bereitgestellt wird, um den Koppelverbinder an einem Substrat, wie einem Boden, zu befestigen;
wobei
- alle ersten elektrischen Leiter (3) der Fußbodenteile (1) in benachbart angeordneten Fußbodenteilen (1) in einer ersten Richtung elektrisch verbunden sind, und alle zweiten elektrischen Leiter (4) von Fußbodenteilen (1) in einer zweiten Richtung von benachbart angeordneten Fußbodenteilen (1) elektrisch verbunden sind.

2. System nach Anspruch 1, wobei die jeweiligen ersten Verbindungspunkte (8) und zweiten Verbindungspunkte (9) von benachbarten Fußbodenteilen (1) durch elektrische Leiter von Koppelverbindern (25, 26) gegenseitig elektrisch verbunden sind, wobei jeder Kontakt eines Verbindungspunkts eines Teils und eines Leiters eines Koppelverbinders (25, 26) mit einem leitfähigen Kleber ausgestattet sind, um die Fußbodenteile und die Koppelverbinder elektrisch und mechanisch zu koppeln.

3. System nach Anspruch 1 oder 2, wobei die erste Richtung der ersten Verbinder und die zweite Richtung der zweiten Verbinder in einem Winkel zueinander und insbesondere zueinander senkrecht sind.

4. System nach einem der vorhergehenden Ansprüche, das ferner eine Steuerung zum nachfolgenden Messen eines elektrischen Widerstands zwischen Kombinationen von elektrisch verbundenen ersten elektrischen Leitern und elektrisch verbundenen zweiten elektrischen Leitern umfasst.

5. System nach Anspruch 4, wobei die Steuerung vorgesehen ist, um ein Datensignal bereitzustellen, das einen Druck auf jedes der Fußbodenteile repräsentiert.

6. Fußbodenteil (1) zur Verwendung in einem System nach einem der vorhergehenden Ansprüche zum Herstellen eines Bodens zur Erkennung eines Drucks, umfassend:
- eine Fußbodenteilschicht, die eine Oberseite umfasst;
- eine Fußbodenunterschicht, umfassend eine Unterlage, wobei die Unterlage auf der Seite liegt, die von der Oberseite weg weist, und ausgestattet ist mit:
a. einer ersten Folienschicht (2), die mit einem ersten elektrischen Leiter (3) und einem zweiten elektrischen Leiter (4) ausgestattet ist, die voneinander elektrisch isoliert sind;
b. eine zweite Folienschicht (5), die einen elektrischen Widerstand (6) umfasst;
c. wobei die erste Schicht (2) und die zweite Schicht (5) übereinander angeordnet sind, so dass die jeweiligen Seiten mit dem ersten und zweiten elektrischen Leiter (3, 4) und dem Widerstand (6) zueinander weisen, und so dimensioniert sind, dass eine Projektion der Position des elektrischen Widerstands (6) auf der ersten Schicht (2) einen Bereich abdeckt, in den sich sowohl der erste als auch der zweite Leiter (3, 4) erstrecken;
d. einen Separator (7), um die erste und die zweite Schicht (2, 5) mindestens lokal in einem Abstand zueinander zu halten, wenn kein Druck auf die Vorrichtung ausgeübt wird;
e. mindestens einen ersten Verbindungspunkt (8), der elektrisch an den ersten elektrischen Leiter (3) gekoppelt ist und von außen an einem ersten Paar von gegenüber liegenden Seiten der Vorrichtung zugänglich ist;
f. mindestens einen zweiten Verbindungspunkt (9), der elektrisch an den zweiten elektrischen Leiter (4) gekoppelt ist und von außen an einem zweiten Paar von gegenüber liegenden Seiten der Vorrichtung zugänglich ist.

7. Fußbodenteil nach Anspruch 6, wobei der erste elektrische Leiter (3) und der zweite elektrische Leiter (4) als Finger angeordnet sind, die sich zwischen einander erstrecken.

8. Fußbodenteil nach Anspruch 6 oder 7, wobei der erste und/oder zweite elektrische Leiter (3, 4) Aluminium umfasst bzw. umfassen.

9. Fußbodenteil nach einem der Ansprüche 6 bis 8, wobei der Widerstand (6) eine Kohleschicht umfasst.

10. Fußbodenteil nach einem der Ansprüche 6 bis 9, wobei der Separator (7) Farbpunkte umfasst, die auf mindestens einer der Schichten angeordnet sind.

11. Fußbodenteil nach einem der Ansprüche 6 bis 10, umfassend einen elektrisch leitfähigen Pfad von den nach außen weisenden Seiten der ersten Folienschicht (2) zu der zweiten Folienschicht (5).

12. Fußbodenteil nach Anspruch 11, wobei der leitfähige Pfad durch ein durchgehendes Loch (10) gebildet wird.

13. Fußbodenteil nach einem der vorhergehenden Ansprüche, wobei die Kombination der ersten und zweiten Folienschichten (2, 5) als ganzes wasserbeständig ist.

## Revendications

1. Système pour former un sol pour détecter une pression appliquée sur celui-ci, comprenant :
- une pluralité de pièces de plancher disposées de manière adjacente (1), chaque pièce comprenant :
- une couche de pièce de plancher comprenant un côté supérieur ;
- un côté arrière, pourvu :
- d'une première couche de film (2) pourvue d'au moins un premier conducteur électrique (3) et d'au moins un deuxième conducteur électrique (4), isolés électriquement l'un de l'autre ;
- d'une deuxième couche de film (5) comprenant une résistance électrique (6) ;
- la première couche (2) et la deuxième couche (5) étant disposées l'une au-dessus de l'autre de telle sorte que les côtés respectifs avec l'au moins un premier et deuxième conducteur électrique (3, 4) et la résistance (6) soient en regard l'un de l'autre, et étant dimensionnées de telle sorte qu'une projection de l'emplacement de la résistance électrique (6) sur la première couche (2) couvre une zone jusqu'à laquelle s'étendent à la fois l'au moins un premier et deuxième conducteur électrique (3, 4) ;
- d'un séparateur (7) pour maintenir la première et la deuxième couche (2, 5) au moins localement à une certaine distance l'une de l'autre lorsqu'aucune pression n'est appliquée à la pièce de plancher ;
- d'au moins un premier point de connexion (8) accouplé électriquement au premier conducteur électrique (4) et accessible depuis l'extérieur au niveau d'une première paire de côtés opposés de la pièce de plancher (1) ;
- au moins un deuxième point de connexion (9) accouplé électriquement au deuxième conducteur électrique (3) et accessible depuis l'extérieur au niveau de la deuxième paire de côtés opposés de la pièce de plancher (1) ;
- une pluralité d'interconnexions (25, 26), les interconnexions (25, 26) comprenant chacune :
- une couche de film, pourvue, au niveau d'un premier côté de celle-ci, d'un conducteur électrique,
- un adhésif, prévu au niveau du deuxième côté de celle-ci, pour fixer l'interconnexion à un substrat tel qu'un sol ;
- tous les premiers conducteurs électriques (3) de pièces de plancher (1) dans des pièces de plancher (1) disposées de manière adjacente dans une première direction étant connectés électriquement et tous les deuxièmes conducteurs électriques (4) de pièces de plancher (1) dans une deuxième direction de pièces de plancher (1) disposées de manière adjacente étant connectés électriquement.

2. Système selon la revendication 1, dans lequel les premiers points de connexion (8) et les deuxièmes points de connexion (9) respectifs de pièces de plancher (1) adjacentes sont connectés électriquement les uns aux autres par des conducteurs électriques d'interconnexions (25, 26), chaque contact d'un point de connexion d'une pièce et d'un conducteur d'une interconnexion (25, 26) étant pourvu d'un adhésif conducteur pour accoupler électriquement et mécaniquement les pièces de plancher et les interconnexions.

3. Système selon la revendication 1 ou 2, dans lequel la première direction des premiers connecteurs et la deuxième direction des deuxièmes connecteurs sont orientées suivant un certain angle, et en particulier sont mutuellement perpendiculaires.

4. Système selon l'une quelconque des revendications précédentes, comprenant en outre un dispositif de commande pour mesurer subséquemment une résistance électrique entre des combinaisons de premiers conducteurs électriques connectés électriquement et de deuxièmes conducteurs électriques connectés électriquement.

5. Système selon la revendication 4, dans lequel le dispositif de commande est prévu pour fournir un signal de données représentant une pression sur chacune des pièces de plancher.

6. Pièce de plancher (1) pour l'utilisation dans un système selon l'une quelconque des revendications précédentes, pour former un sol pour détecter une pression, comprenant :
- une couche de pièce de plancher comprenant un côté supérieur ;
- une couche inférieure de plancher comprenant un support, le support sur le côté détourné du côté supérieur étant pourvu :
a. d'une première couche de film (2) pourvue d'un premier conducteur électrique (3) et d'un deuxième conducteur électrique (4), isolés électriquement l'un de l'autre ;
b. d'une deuxième couche de film (5) comprenant une résistance électrique (6) ;
c. la première couche (2) et la deuxième couche (5) étant disposées l'une au-dessus de l'autre de telle sorte que les côtés respectifs avec le premier et deuxième conducteur électrique (3, 4) et la résistance (6) soient en regard l'un de l'autre, et étant dimensionnées de telle sorte qu'une projection de l'emplacement de la résistance électrique (6) sur la première couche (2) couvre une zone jusqu'à laquelle s'étendent à la fois le premier et le deuxième conducteur électrique (3, 4) ;
d. d'un séparateur (7) pour maintenir la première et la deuxième couche (2, 5) au moins localement à une certaine distance l'une de l'autre lorsqu'aucune pression n'est appliquée au dispositif ;
e. d'au moins un premier point de connexion (8) accouplé électriquement au premier conducteur électrique (3) et accessible depuis l'extérieur au niveau d'une première paire de côtés opposés du dispositif ;
f. d'au moins un deuxième point de connexion (9) accouplé électriquement au deuxième conducteur électrique (4) et accessible depuis l'extérieur au niveau de la deuxième paire de côtés opposés du dispositif.

7. Pièce de plancher selon la revendication 6, dans laquelle le premier conducteur électrique (3) et le deuxième conducteur électrique (4) sont disposés sous forme de doigts qui s'étendent les uns entre les autres.

8. Pièce de plancher selon la revendication 6 ou 7, dans laquelle le premier et/ou le deuxième conducteur électrique (3, 4) comprennent de l'aluminium.

9. Pièce de plancher selon l'une quelconque des revendications 6 à 8, dans laquelle la résistance (6) comprend une couche de carbone.

10. Pièce de plancher selon l'une quelconque des revendications 6 à 9, dans laquelle le séparateur (7) comprend des points de peinture disposés sur au moins l'une des couches.

11. Pièce de plancher selon l'une quelconque des revendications 6 à 10, comprenant une trajectoire électriquement conductrice allant depuis les côtés orientés vers l'extérieur de la première couche de film (2) jusqu'à la deuxième couche de film (5).

12. Pièce de plancher selon la revendication 11, dans laquelle la trajectoire conductrice est formée par un trou traversant (10).

13. Pièce de plancher selon l'une quelconque des revendications précédentes, dans laquelle la combinaison de la première et de la deuxième couche de film (2, 5) est dans l'ensemble résistante à l'eau.
